# EUROPÄISCHE PATENTSCHRIFT

(11) **EP 1 184 128 B1**
(45) Veröffentlichungstag und Bekanntmachung des Hinweises auf die Patenterteilung: **25.06.2003**
(21) Anmeldenummer: 00402400.6
(22) Anmeldetag: 31.08.2000
(51) Int. Cl.: B23K 26/18, B23K 26/00, B21C 37/08

(54) **Verfahren zur Herstellung eines Metallrohres aus Kupfer**
Method for the production of a metal pipe from copper
Procédé de fabrication d'un tuyau métallique en cuivre

(43) Veröffentlichungstag der Anmeldung: 06.03.2002
(73) Patentinhaber: Nexans, 75008 Paris (FR)
(72) Erfinder: Meyer, Michael, 30938 Fuhrberg (DE); Arntz, Hans-Joachim, 30851 Langenhagen (DE); Harten, Friedrich, 31655 Stadthagen (DE)
(74) Vertreter: Döring, Roger, Dipl.-Ing.

(56) Entgegenhaltungen:
- EP-A- 0 496 231
- WO-A-90/10509
- US-A- 5 676 865

## Beschreibung

Die Erfindung betrifft ein Verfahren zur Herstellung eines Metallrohres nach dem Oberbegriff des Anspruchs 1.

Für die kontinuierliche Herstellung von längsnahtgeschweißten Metallrohren sind seit langem elektrische Nahtschweißverfahren wie z.B. das Hochfrequenzschweißen, das Widerstandsschweißen, das Lichtbogenschweißverfahren wie z.B. das WIG-Schweißen oder das Plasmaschweißen bekannt. Diese Schweißverfahren haben sich für die unterschiedlichen Werkstoffe und Rohrabmessungen bewährt.

In jüngster Zeit hat sich das Laserschweißen für bestimmte Werkstoffe und Produkte als besonders geeignet erwiesen, da das Laserschweißen einige entscheidende Vorteile gegenüber den althergebrachten Schweißverfahren aufweist. So ist die durch das Laserschweißen erzeugte Schweißnaht charakterisiert durch eine schlanke Nahtgeometrie mit einem hohen Tiefen-Breiten-Verhältnis und einer kleinen Wärmeeinflußzone. Ursachen für diese Merkmale sind die hohe, eng begrenzte Energieeinbringung und hohe Schweißgeschwindigkeiten.

Während das Laserschweißen von Rohren aus Stahl, insbesondere aus rostfreiem Stahl, verzinktem Stahl sowie aus Aluminium, insbesondere copolymerbeschichteten Aluminiumbändern bereits einen breiten Raum einnimmt, hat sich die Herstellung von Rohren aus Kupfer und Kupferlegierungen noch nicht durchsetzen können. Die Ursache hierfür ist darin zu sehen, daß Kupfer die Laserstrahlung aufgrund seiner blanken Oberfläche so sehr reflektiert, daß eine Einleitung der Laserstrahlenergie in die Bandkanten verhindert und eine Verschweißung der Bandkanten nicht möglich ist.

Auch ist die hohe Wärmeleitfähigkeit des Kupfers ein Grund für die schlechte Wärmestaubildung im Bereich der zu verschweißenden Bandkanten.

Der vorliegenden Erfindung liegt die Aufgabe zugrunde, ein Verfahren anzugeben, mit welchem lasergeschweißte Kupferrohre mit geringer Wanddicke in kontinuierlicher Arbeitsweise in großen Längen hergestellt werden können.

Diese Aufgabe wird durch die Kombination der kennzeichnenden Merkmale des Anspruchs 1 gelöst.

Durch die Kombination der Merkmale, daß die Oberfläche des Kupferrohres im Bereich seiner Bandkanten aufgerauht und mit einem flüssigen Kohlenwasserstoff benetzt wird, kann die Einleitung der Laserenergie in den Bandkantenbereich erheblich gesteigert werden. Die Erklärung für die Optimierung durch die Benetzung mit flüssigem Kohlenwasserstoff wird darin gesehen, daß entweder durch den Kohlenwasserstoff der Laserstrahl, der üblicherweise unter einem Winkel kleiner als 90° auf die Bandkanten gerichtet ist, aufgrund des Brechungsindex des Kohlenwasserstoffs abgelenkt wird oder der Laserstrahl den Kohlenwasserstoff verbrennt, wodurch ein Kohlenstoffilm auf den Bandkanten entsteht, der die Einleitung der Laserenergie verbessert.

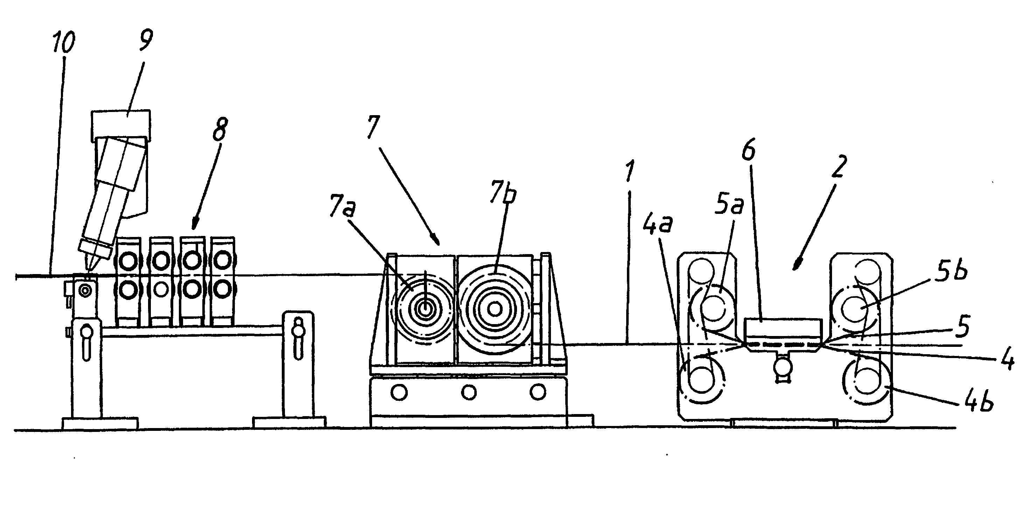

Die Erfindung ist anhand des in der Figur schematisch dargestellten Ausführungsbeispiels näher erläutert.

Ein von einer nicht mehr dargestellten Spule kontinuierlich abgezogenes Kupferband 1 wird zunächst einer Benetzungsstation 2 zugeführt, in welcher das Band 1 beidseitig mit z.B. Petroleum benetzt wird.

Die Benetzungsstation 2 weist zwei Filzstreifen 4 und 5 auf, die von einer Trommel 4a bzw. 5a abgezogen und auf eine weitere Trommel 4b bzw. 5b aufgewickelt werden. Die Filzstreifen 4 und 5 durchlaufen einen Behälter 6, in welchem sich ein Vorrat an Petroleum befindet.

Das mit Petroleum benetzte Kupferband 1 wird dann einer Prägestation 7 zugeführt, in welcher zumindest der Bereich der Längskanten des Kupferbandes 1 aufgerauht werden. In der Figur sind zwei Rollen 7a und 7b dargestellt, welche die Aufrauhung durchführen. Die Rollen 7a und 7b dienen gleichzeitig als sog. Besäumschere, welche ein Kupferband 1 mit einer vorbestimmten Breite herstellt, indem die Längskanten besäumt werden.

Anstelle der Aufrauhung durch die Prägerollen 7a und 7b ist auch ein Bürsten oder Sandstrahlen der Bandkanten möglich.

Das mit Petroleum benetzte und an seiner Längskanten aufgerauhte Kupferband 1 gelangt dann in eine Formrollenstation 8, in welcher das Kupferband 1 in mehreren Stufen zu einem Schlitzrohr geformt wird.

Mittels einer Laserschweißvorrichtung 9, vorzugsweise einem cw-Festkörperlaser werden die Längskanten des Schlitzrohres verschweißt und das geschweißte Rohr 10 beispielsweise einer nicht mehr dargestellten Wellvorrichtung oder einem ebenfalls nicht mehr dargestellten Aufwickler zugeführt.

Mit Hilfe des erfindungsgemäßen Verfahrens ist es gelungen, ein Kupferrohr mit folgenden Abmessungen herzustellen:

| | |
|---|---|
| Außendurchmesser | 3,6 mm |
| Wanddicke | 0,2 mm |

Die Leistung der Laserschweißvorrichtung betrug 2000 W, die Schweißgeschwindigkeit 20 m/min.

## Patentansprüche

1. Verfahren zur Herstellung eines Metallrohres, bei dem ein Metallband kontinuierlich von einem Bandvorrat abgezogen und zu einem Schlitzrohr mit auf Stoß geführten Bandkanten geformt wird, und die Bandkanten mit einem Laser verschweißt werden, **gekennzeichnet durch** folgende Merkmale:
a) es wird ein Band aus Kupfer oder einer Kupferlegierung verwendet
b) zumindest der Bereich der Bandkanten wird vor dem Schweißen mechanisch aufgerauht, wobei die Rauhtiefe oberhalb von Rₐ = 12,5 µm liegt und
c) zumindest der Bereich der Bandkanten wird vor dem Schweißen mit einem flüssigen Kohlenwasserstoff benetzt.

2. Verfahren nach Anspruch 1, **dadurch gekennzeichnet, daß** ein Festkörperlaser verwendet wird.

3. Verfahren nach Anspruch 2, **dadurch gekennzeichnet, daß** ein cw-Festkörperlaser verwendet wird.

4. Verfahren nach Anspruch 1 oder einem der folgenden, **dadurch gekennzeichnet, daß** während des Schweißens die Schweißnaht mit einem Schutzgas abgedeckt wird.

5. Verfahren nach Anspruch 4, **dadurch gekennzeichnet, daß** ein Gemisch aus Helium und Argon verwendet wird.

6. Verfahren nach Anspruch 1 oder einem der folgenden, **dadurch gekennzeichnet, daß** zur Erziehlung einer hohen Schweißgeschwindigkeit das "keyhole"-Schweißverfahren verwendet wird.

## Claims

1. A process for producing a metal pipe, in which a metal band is drawn continuously from a band supply and formed into a slot pipe with jointed band edges, and the band edges are welded with a laser, **characterized by** the following features:
a) a band made from copper or a copper alloy is used
b) at least the area of the band edges is mechanically roughened prior to welding, wherein the depth of roughness lies above Rₒ= 12.5 µm and
c) at least the area of the band edges is moistened with a liquid carbon hydride prior to welding.

2. A process according to claim 1, **characterized in that** a solid state laser is used.

3. A process according to claim 2, **characterized in that** a cw-solid state laser is used.

4. A process according to claim 1 or one of the following, **characterized in that** during welding the weld joint is covered with a protective gas.

5. A process according to claim 4, **characterized in that** a mixture of helium and argon is used.

6. A process according to claim 1 or one of the following, **characterized in that** the "key-hole" welding process is used to achieve a great welding speed.

## Revendications

1. Procédé de fabrication d'un tube métallique, selon lequel une bande métallique est déroulée en continu à partir d'une réserve de bande et transformée en un tube fendu avec des bords jointifs et selon lequel les bords de la bande sont soudés par laser, **caractérisé par** les éléments suivants :
a) une bande en cuivre ou en un alliage de cuivre est utilisée
b) au moins la zone des bords de la bande est rendue rugueuse mécaniquement avant le soudage, avec une rugosité Rₐ supérieure à 12,5 µm et
c) qu'au moins la zone des bords est mouillée avec un hydrocarbure liquide avant le soudage.

2. Procédé selon la revendication 1, **caractérisé par** l'utilisation d'un laser à solide.

3. Procédé selon la revendication 2, **caractérisé par** l'utilisation d'un laser à solide continu.

4. Procédé selon la revendication 1 ou une des revendications suivantes, **caractérisé par le fait que** pendant le soudage, la soudure est protégée par du gaz de protection.

5. Procédé selon la revendication 4, **caractérisé par** l'utilisation d'un mélange d'hélium et d'argon.

6. Procédé selon la revendication 1 ou une des revendications suivantes, **caractérisé par** l'utilisation du procédé "keyhole" pour l'obtention d'une grande vitesse de soudage.
